(19) Europäisches Patentamt
European Patent Office
Office européen des brevets

(11) **EP 2 769 112 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(21) Anmeldenummer: **12772090.2**

(22) Anmeldetag: **20.09.2012**

(51) Int Cl.:
*F16D 48/06* (2006.01)    *B60W 10/02* (2006.01)
*B60W 20/00* (2006.01)

(86) Internationale Anmeldenummer:
**PCT/EP2012/068473**

(87) Internationale Veröffentlichungsnummer:
**WO 2013/056937 (25.04.2013 Gazette 2013/17)**

(54) **VERFAHREN ZUM NÄHERUNGSWEISEN ERMITTELN DES VON EINER KUPPLUNG EINES ANTRIEBSSTRANGS EINES FAHRZEUGS TATSÄCHLICHEN ÜBERTRAGENEN DREHMOMENTS**

METHOD FOR THE APPROXIMATE DETERMINATION OF THE TORQUE WHICH IS ACTUALLY TRANSMITTED BY A CLUTCH OF A DRIVE TRAIN OF A VEHICLE

PROCÉDÉ POUR DÉTERMINER APPROXIMATIVEMENT LE COUPLE RÉELLEMENT TRANSMIS PAR UN EMBRAYAGE D'UNE CHAÎNE CINÉMATIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2011 DE 102011084844**

(43) Veröffentlichungstag der Anmeldung:
**27.08.2014 Patentblatt 2014/35**

(73) Patentinhaber: **Bayerische Motoren Werke Aktiengesellschaft**
**80809 München (DE)**

(72) Erfinder:
• **CHRIST, Thomas**
**81245 München (DE)**
• **LINS, Felix**
**80469 München (DE)**

(74) Vertreter: **Diener, Reinhold Jürgen**
**Bayerische Motoren Werke AG**
**Patentabteilung AJ-5**
**80788 München (DE)**

(56) Entgegenhaltungen:
**WO-A1-01/20200    FR-A1- 2 921 453**

• **BECK R ET AL: "Model Predictive Control of a Parallel Hybrid Vehicle Drivetrain", DECISION AND CONTROL, 2005 AND 2005 EUROPEAN CONTROL CONFERENCE. CDC-E CC '05. 44TH IEEE CONFERENCE ON SEVILLE, SPAIN 12-15 DEC. 2005, PISCATAWAY, NJ, USA,IEEE, 12. Dezember 2005 (2005-12-12), Seiten 2670-2675, XP010884098, ISBN: 978-0-7803-9567-1**

EP 2 769 112 B1

**Beschreibung**

Verfahren zum Regeln des mittels eines Antriebsstrangs eines Fahrzeugs auf Antriebsrädern des Fahrzeugs übertragenen Drehmoments entsprechend einem Soll-Drehmoment.

Die vorliegende Erfindung betrifft ein Verfahren zum Regeln des mittels eines Antriebsstrangs eines Fahrzeugs auf die Antriebsräder des Fahrzeugs übertragenen Drehmoments entsprechend einem Soll-Drehmoment gemäß den Merkmalen des Patentanspruches 1.

Aus der WO 01/20200 A1 ist ein Verfahren zum Regeln einer elektrohydraulisch gesteuerten Kupplung oder Bremse eines Getriebes bekannt, bei dem die Kupplung oder Bremse mittels eines modellbasierten Kompensationsdruckreglers unter Verwendung eines Beobachters geregelt wird.

Zum technischen Hintergrund der vorliegenden Erfindung zählen die FR 2 921 453 A sowie Beck R ET AL: "Model Predictive Control of a Parallel Hybrid Vehicle Drivetrain"; DECISION AND CONTROL, 2005 AND 2005 EUROPEAN CONTROL CONFERENCE. CDC-E CC '05. 44TH IEEE CONFERENCE ON SEVILLE, SPAIN 12-15 DEC. 2005, PISCATAWAY, NJ, USA, IEEE, 12. Dezember 2005 (2005-12-12), Seiten 2670 - 2675, XP010884098, ISBN: 978-0-7803-9567-1.

Bei Parallelhybridfahrzeugen ist die Kurbelwelle des Verbrennungsmotors üblicherweise über eine Trennkupplung mit einer Getriebeeingangswelle verbunden, auf der eine elektrische Maschine angeordnet ist. Die Getriebeeingangswelle kann somit wahlweise von dem Verbrennungsmotor oder von der elektrischen Maschine oder gleichzeitig von dem Verbrennungsmotor und der elektrischen Maschine angetrieben werden. Bei dem Getriebe handelt es sich üblicherweise um ein Automatikgetriebe, welches ein "integriertes Anfahrelement", d. h. eine für Anfahrvorgänge ausgelegte Kupplung aufweist.

Sogenannte "Vollhybrid-Fahrzeuge" können auch ohne Verbrennungsmotor, d. h. rein elektrisch fahren. Im reinen Elektrobetrieb ist die zwischen der Kurbelwelle des Verbrennungsmotors und der Getriebeeingangswelle angeordnete Trennkupplung geöffnet und der Verbrennungsmotor abgestellt. Für einen Übergang in den verbrennungsmotorischen Fahrbetrieb oder in einen "Mischbetrieb", bei dem das Fahrzeug sowohl vom Verbrennungsmotor als auch von der elektrischen Maschine angetrieben wird, muss der Verbrennungsmotor aus dem rein elektrischen Fahrbetrieb heraus zugestartet werden.

Bei vielen bislang bekannten Hybridkonzepten ist hierzu ein separates Zustartsystem vorgesehen. Der Verbrennungsmotor wird dabei nicht von der dem Antriebsstrang zugeordneten elektrischen Maschine, sondern von einem separaten "Anlasser" gestartet. Nach einer Synchronisierung der Drehzahl der Kurbelwelle mit der Drehzahl der elektrischen Maschine des Hybridantriebs wird die Trennkupplung geschlossen und der Verbrennungsmotor kann Drehmoment zum Antrieb des Fahrzeugs bereitstellen.

Ein separates Zustartsystem hat den Vorteil, dass die elektrische Maschine des Hybridantriebs vom Zustart des Verbrennungsmotors nicht, bzw. nicht unmittelbar beeinflusst wird. Ein Nachteil eines separaten Zustartsystems sind hingegen die damit verbundenen Zusatzkosten. Ferner muss das 14-Volt-Bordnetz aufwändig erweitert werden, um Spannungseinbrüche während des Startvorgangs des Verbrennungsmotors zu begrenzen. Ein separates Zustartsystem ist üblicherweise über einen Riementrieb mit dem Verbrennungsmotor gekoppelt. Ein solcher Riementrieb benötigt Fahrzeuglängsrichtung zusätzlichen Bauraum.

Ein Verzicht auf ein separates Zustartsystem ist aufgrund vielfältiger technischer Randbedingungen häufig nicht ohne weiteres möglich. Würde man den Verbrennungsmotor im elektrischen Fahrbetrieb über die elektrische Maschine des Hybridantriebs durch Schließen der Trennkupplung zustarten, so wäre für eine "qualitativ hochwertige Regelung" des Zustartvorgangs (Vermeidung von Drehmomentschwankungen an den Antriebsrädern des Fahrzeugs) eine möglichst genaue Kenntnis des von der Trennkupplung übertragenen Drehmoments erforderlich.

Aufgabe der Erfindung ist es, ein Verfahren zum möglichst genauen "näherungsweisen Ermitteln" des von einer Kupplung eines Antriebsstrangs eines Fahrzeugs, insbesondere Hybridfahrzeugs, tatsächlichen übertragenen Drehmoments.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Kupplungen, insbesondere Trennkupplungen, wie sie in Antriebssträngen von Fahrzeugen verbaut sind, werden üblicherweise hydraulisch bzw. elektrohydraulisch angesteuert. Selbst wenn man die diversen Parameter (z. B. hydraulischer Steuerdruck, Kupplungstemperatur, etc.), mit bzw. unter denen die Steuereinrichtung der Kupplung angesteuert wird, kennt, kann hieraus nur relativ grob auf das von der Kupplung übertragbare Drehmoment bzw. das von der Kupplung tatsächlich übertragene Drehmoment geschlossen werden. Das tatsächlich von einer Kupplung übertragene Drehmoment hängt nämlich von einer Vielzahl teils unbekannter oder nur näherungsweise bekannter Parameter (wie Verschleißzustand der Kupplung, Öltemperatur und der damit korrelierenden Viskosität, etc.) ab.

Ausgangspunkt der Erfindung ist die Idee, das von einer Kupplung tatsächlich übertragbare bzw. übertragene Drehmoment als Summe eines "über die Kupplungsansteuerung eingesteuerten Drehmoments" bzw. eines "theoretisch übertragenen bzw. übertragbaren Drehmoments" und eines "StörDrehmoments" zu betrachten, das von einer Vielzahl von Störfaktoren beeinflusst sein kann.

Das Grundprinzip der Erfindung besteht darin, das Stör-Drehmoment (im regelungstechnischen Sinne) durch eine Störgrößenbeobachtung mittels eines Zustandsschätzers, z. B. über einen Kalman-Filter, zu ermitteln.

Um die Genauigkeit der Ermittlung des von der Kupplung tatsächlich übertragenen Drehmoments zu verbessern, wird das Kupplungsmoment als "Zustand eines Zustandsraummodells" eingeführt. Das aus der hydraulischen Ansteuerung berechnete Kupplungsmoment (theoretisch übertragenes bzw. übertragbares Drehmoment) wird zusätzlich über einen Störgrößenbeobachter korrigiert. Es kann vorgesehen sein, dass die Korrektur des Kalman-Filters nur im Moment des Zustarts des Verbrennungsmotors aktiv ist. Sie soll sich an dem Kupplungsdrehzahlfehler (Kupplungsdrehzahl = Drehzahldifferenz zwischen Verbrennungsmotor und elektrischer Maschine) zwischen Modell und Realität orientieren.

Je besser man das von der Kupplung tatsächlich übertragene Drehmoment kennt, umso besser kann das bei einem Zustart des Verbrennungsmotors dem Antriebsstrang überlagerte Verbrennungsmotoranschleppmoment kompensiert werden. Je besser das Verbrennungsmotoranschleppmoment kompensiert werden kann, umso geringer sind die Auswirkungen des Zustarts auf das Antriebsmoment der Antriebsräder und umso höher ist der Fahrkomfort.

Voraussetzung für eine näherungsweise Ermittlung des von der Kupplung tatsächlich übertragenen Drehmoments ist die Bereitstellung eines den Antriebsstrang abbildenden "Zustandsraummodells". Unter dem Begriff Antriebsstrang kann z. B. die Gesamtheit der Drehmoment übertragenden Komponenten verstanden werden, angefangen vom Verbrennungsmotor bzw. der Kurbelwelle des Verbrennungsmotors bis zu den Antriebsrädern des Fahrzeugs.

Bei einem Schließen der betrachteten Kupplung (d. h. der Kupplung, deren Drehmoment ermittelt werden soll), wird auf der Basis eines vorgegebenen physikalischen Models der Kupplung und der eingesteuerten Schließparameter (z. B. eingesteuerter Hydraulikdruck etc.) ein von der Kupplung theoretisch übertragbares oder übertragenes Moment ermittelt.

Das von der Kupplung tatsächlich übertragene Drehmoment kann sich von dem theoretisch übertragbaren oder übertragenen Drehmoment unterscheiden, was durch Addieren des bereits erwähnten "Stör-Drehmoments" berücksichtigt wird.

Das Stör-Drehmoment wird auf Basis des den Antriebsstrang abbildenden Zustandsraummodells sowie auf Basis von Ist-Drehzahlen einzelner Antriebsstrangkomponenten und/oder auf Basis von Ist-Drehmomenten ermittelt, die von einzelnen Antriebstrangkomponenten aktuell übertragen werden. Das Stör-Drehmoment wird also regelungstechnisch mittels einer Zustandsbeobachtung des Antriebsstrangs ermittelt. Die Ist-Drehzahlen bzw. die Ist-Drehmomente, welche in die Zustandsbeobachtung eingehen, können unmittelbar gemessenen oder aus anderen gemessenen oder anderweitig ermittelten oder bekannten Zustandsparametem des Antriebsstrangs abgeleitet werden.

Ein wesentlicher Vorteil der Erfindung besteht darin, dass mit dem erfindungsgemäßen Verfahren das von der Kupplung tatsächlich übertragbare bzw. übertragene Drehmoment relativ genau ermittelt werden kann, was Voraussetzung für eine qualitativ hochwertige Regelung des Verbrennungsmotorzustarts aus dem rein elektrischen Fahrbetrieb heraus ist. Die Erfindung ermöglicht somit einen Verzicht auf ein separates Zustartsystem.

Kennt man das von einer Kupplung des Antriebsstrangs tatsächlich übertragene Drehmoment genau oder zumindest relativ genau, so kann hierauf basierend, das auf Antriebsräder des Fahrzeugs übertragene Drehmoment entsprechend einem Soll-Drehmoment geregelt werden. Das Stör-Drehmoment beschreibt, wie oben bereits erläutert, eine eventuelle Abweichung des tatsächlich von der Kupplung übertragbaren bzw. übertragenen Drehmoments von dem über die Schließparameter eingesteuerten Soll-Drehmoment.

Nach einer Weiterbildung der Erfindung kann das Stör-Drehmoment durch Aufprägen eines Kompensationsmoments mittels der elektrischen Maschine des Antriebsstrangs auf eine Drehkomponente des Antriebsstrangs (z. B. auf die Getriebeeingangswelle) und/oder durch Verändern der eingesteuerten Schließparamater der Kupplung kompensiert werden. Auf diese Weise können unerwünschte Drehungleichförmigkeiten im Antriebsstrang verringert bzw. eliminiert werden, was nicht nur für einen Zustart des Verbrennungsmotors aus dem rein elektrischen Fahrbetrieb heraus von großer Bedeutung ist, sondern auch für eine aktive Schwingungsdämpfung während des normalen Fahrbetriebs.

Im Folgenden wird die Erfindung im Zusammenhang mit der Zeichnung näher erläutert.

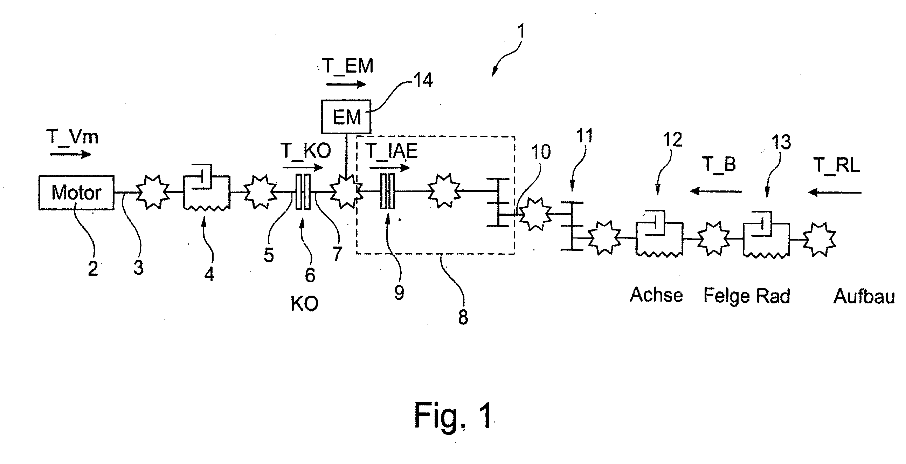

Die einzige Figur 1 beschreibt ein Zustandsraummodell eines typischen Parallelhybridantriebsstrangs eines Fahrzeugs. Ein Parallelhybridantriebsstrang 1 eines Fahrzeugs weist einen Verbrennungsmotor 2 auf, dessen Kurbelwelle ein Drehmoment T_Vm abgibt. Bei dem in Figur 1 gezeigten Ausführungsbeispiel ist eine Kurbelwelle 3 des Verbrennungsmotors 2 über einen Torsionsschwingungsdämpfer 4 (oder über eine Kombination aus einem Torsionsschwingungsdämpfer und ein "Fliehkraftpendel") mit einer Eingangsseite 5 einer Trennkupplung, die hier auch mit der Bezeichnung "K0" bezeichnet ist, verbunden. Die Trennkupplung 6 bzw. K0 überträgt ein tatsächliches Drehmoment T_K0 auf ein Abtriebselement 7 der Kupplung K0. Das Abtriebselement 7 ist hier durch eine Getriebeeingangswelle eines Automatikgetriebes 8 gebildet.

Das Automatikgetriebe 8 weist ein integriertes Anfahrelement 9 auf, d. h. eine Kupplung, die so ausgelegt ist, dass sie ein Anfahren des Fahrzeugs ermöglicht. Eine Getriebeausgangswelle 10 des Automatikgetriebes 8 ist z. B. über eine hier nicht näher dargestellte Gelenkwelle mit einem Hinterachsgetriebe 11 verbunden. Das Hinterachsgetriebe 11 verteilt das Drehmoment über eine "Achse" 12, d. h. über eine linke und rechte Antriebswelle auf Antriebsräder, die hier zusammenfassend schematisiert mit dem Bezugzeichen 13 dargestellt sind. Die Antriebsräder 13 wiederum sind auf einem hier nicht näher dargestellten Fahrzeugaufbau gelagert.

Wie aus dem in Figur 1 gezeigten Modell ersichtlich ist, kann der Antriebsstrang 1 im Wesentlichen durch folgende Drehmomente beschrieben werden:

- T_Vm: vom Verbrennungsmotor abgegebenes Drehmoment.
- T_K0: tatsächlich von der Trennkupplung 6 bzw. K0 übertragbares oder übertragenes Drehmoment.
- T_EM: von einer elektrischen Maschine 14 des Hybridantriebsstrangs auf den Hybridantriebsstrang 1 ausgeübtes Drehmoment.
- T_IAE: von einem integrierten Anfahrelement des Getriebes auf den Antriebsstrang 1 ausgeübtes Drehmoment.
- T_B: von Fahrzeugbremsen auf Antriebsräder des Fahrzeugs ausgeübtes Bremsmoment.
- T_RL: Fahrwiderstandsmomente resultierend z. B. aus der Steigung der Fahrbahn, Luftwiderständen des Fahrzeugs etc.

Der Antriebsstrang des Fahrzeugs kann in dem Fachmann bekannter bekannter Weise mittels eines Zustandsraummodels regelungstechnisch abgebildet werden. Für ein lineares, zeitinvariantes Mehrgrößensystem der Ordnung n mit r Eingangsgrößen und m Ausgangsgrößen lässt sich das Zustandsraummodell bekanntlich durch folgende beiden Gleichungen darstellen:

$$dx\,(t)\,/\,dt = A\,x\,(t\,) + B\,u\,(t);$$

$$y\,(t) = C\,x(t) + D\,u\,(t);$$

x (t) beschreibt einen Zustandsvektor, u(t) einen Eingangsvektor oder Steuervektor und y(t) einen Ausgangsvektor (Beobachtungsvektor). A ist die den Antriebsstrang beschreibende Systemmatrix, B die Eingangs- oder Steuermatrix, C die Ausgangs oder Beobachtungsmatrix und D die sogenannte Durchgangsmatrix.

Mittels eines derartigen Zustandsraummodells, welches mehrere, aktuell im Antriebsstrang auftretende Drehzahlen und/oder mehrere, aktuell im Antriebsstrang auftretende Drehmomente sowie das der Kupplung K0 eingesteuerte Drehmoment berücksichtigt, kann ein an der Kupplung K0 auftretendes Stör-Drehmoment ermittelt werden, welches dem der Kupplung K0 eingesteuerten Soll-Drehmoment zu dem von der Kupplung K0 tatsächlich übertragenen Drehmoment $K_{0ist}$ überlagert ist.

## Patentansprüche

1. Verfahren zum Regeln des mittels eines Antriebsstrangs eines Hybrid- Fahrzeugs auf Antriebsräder des Hybrid- Fahrzeugs übertragenen Drehmoments entsprechend einem Soll-Drehmoment ($K_{0,\,soll}$), wobei das von einer Kupplung des Antriebsstrangs tatsächlich übertragene Drehmoment ($K_{0,\,ist}$) näherungsweise mit folgenden Schritten ermittelt wird:

   • Einstellen eines Schließzustandes der Kupplung und Übertragen eines Drehmoments über den Antriebsstrang,
   • Bereitstellen eines den Antriebsstrang abbildenden Zustandsraummodells,
   • rechnerisches Ermitteln eines in dem Schließzustand von der Kupplung theoretisch übertragbaren oder übertragenen Drehmoments ($K_{0,\,theoretisch}$) auf Basis eines vorgegebenen physikalischen Modells der Kupplung und des eingestellten Schließzustandes,
   • Näherungsweises Ermitteln des von der Kupplung tatsächlich übertragenen Drehmoments ($K_{0,\,ist}$) durch Addieren des theoretisch übertragbaren oder übertragenen Drehmoments ($K_{0,\,theoretisch}$) und eines rechnerisch ermittelten Stör-Drehmoments ($K_{0,\,stör}$), wobei das Stör-Drehmoment auf Basis

   o des Zustandsraummodells und eines Kalman-Filters sowie
   o von Ist-Drehzahlen einzelner Antriebsstrangkomponenten und/oder von einzelnen Antriebsstrangkomponenten übertragenen Ist-Drehmomenten, wobei die Ist-Drehzahlen bzw. die Ist-Drehmomente, welche in die Zustandsbeobachtung eingehen, unmittelbar gemessenen oder aus anderen gemessenen oder anderweitig ermittelten oder bekannten Zustandsparametern des Antriebsstrangs abgeleitet werden,

   ermittelt wird; und
   • das an der Kupplung beobachtete Stör-Drehmoment ($K_{0,\,stör}$) durch Aufprägen eines Kompensationsmoments mittels einer elektrischen Maschine auf eine Drehkomponente des Antriebsstrangs und durch Verändern des Schließzustandes der Kupplung kompensiert wird oder nur mittels einer elektrischen Machine auf eine Drehkomponente des Antriebsstrangs Kompensiert wird.

2. Verfahren nach Anspruch 1, **dadurch gekennzeichnet, dass** der Schließzustand der Kupplung über eine Schließhydraulik eingestellt wird.

3. Verfahren nach Anspruch 1 oder 2, **dadurch ge-**

**kennzeichnet, dass** ein Verbrennungsmotor zum Antreiben des Antriebsstrangs vorgesehen ist, wobei ein durch einen Zustart des Verbrennungsmotors verursachtes, an der Kupplung zu erwartendes oder zu beobachtendes Stör-Drehmoment ($K_{0,\,stör}$) kompensiert wird.

## Claims

1. A method of adjusting the torque transmitted along a drive train of a hybrid vehicle to drive wheels of the vehicle and corresponding to a set torque ($K_{0,set}$), wherein the torque ($K_{0,actual}$) actually transmitted by a clutch on the drive train is approximately determined in the following steps:

   • Setting a closed state of the clutch and transmitting a torque along the drive train,
   • Preparing a three-dimensional model of state of the drive train,
   • Calculating a theoretically transmittable or transmitted torque ($K_{0,theoretical}$) by the clutch when closed, on the basis of a preset physical model of the clutch and of the set closing state,
   • Approximately calculating the torque ($K_{0,actual}$) actually transmitted by the clutch by adding the theoretically transmittable or transmitted torque ($K_{0,theoretical}$) and a calculated interfering torque ($K_{0,interfering}$) wherein the interfering torque is obtained on the basis of
   • The three-dimensional model of state and a Kalman filter and
   • Actual speeds of individual drive train components and/or actual torques transmitted by individual drive train components, wherein the actual speeds or the actual torques are directly measured in the observed state or are derived from other measured or otherwise or known parameters of state of the drive train,
   is determined, and,
   • The interfering torque ($K_{0,interfering}$) observed at the clutch is compensated by impressing a compensation torque, using an electric machine, on a rotary component of the drive train and by altering the closed state of the clutch, or is compensated by an electric machine on a rotary component of the drive train.

2. A method according to claim 1, **characterised in that** the closed state of the clutch is set by a hydraulic closing unit.

3. A method according to claim 1 or claim 2, **characterised in that** an internal combustion engine is provided for driving the drive train, wherein an interfering torque ($K_{0,interfering}$) caused by starting the engine and expected or observed at the clutch is compensated.

## Revendications

1. Procédé de régulation du couple transmis par une ligne de transmission d'un véhicule hybride à ses roues motrices, correspondant à un couple de consigne ($K_{0,\,cons}$),
   le couple effectivement transmis ($K_{0,\,réel}$) effectivement transmis par la ligne de transmission se déterminant sensiblement par les étapes suivantes consistant à :

   - régler l'état de fermeture de l'embrayage et transmettre le couple par la ligne de transmission,
   - fournir un modèle volumique d'état figurant la ligne de transmission,
   - déterminer par le calcul le couple ($K_0$ théorique), théoriquement transmissible ou transmis par l'embrayage à l'état fermé, en se fondant sur un modèle physique, prédéfini de l'embrayage et de l'état fermé, réglé,
   - déterminer sensiblement le couple ($K_{0,\,réel}$) effectivement transmis par l'embrayage en additionnant le couple théoriquement transmissible ou transmis ($K_{0\,théorique}$), et le couple parasite déterminé par le calcul ($K_0$ parasite), le couple parasite se déterminant en fonction :

   • du modèle volumique d'état et d'un filtre Kalman ainsi que,
   • de la vitesse de rotation réelle des différents composants de la ligne de transmission et/ou du couple réel transmis par les différents composants de la ligne de transmission, la vitesse de rotation réelle ou le couple réel entrant dans les observations d'état étant mesurées directement ou étant déduits d'autres paramètres d'état de la ligne de transmission, mesurés, connus ou déterminés d'une autre manière, et

   - on compense le couple parasite ($K_{0,\,parasite}$) observé sur l'embrayage en appliquant un couple de compensation par une machine électrique, à un composant rotatif de la ligne de transmission et en compensant, en modifiant l'état de fermeture de l'embrayage ou en compensant seulement à l'aide d'une machine électrique pour un composant rotatif de la ligne de transmission.

2. Procédé selon la revendication 1, **caractérisé en ce qu'** on règle l'état de fermeture de l'embrayage par un moyen hydraulique de fermeture.

**3.** Procédé selon la revendication 1 ou,
   **caractérisé en ce qu'**
   il utilise un moteur thermique pour entrainer la ligne de transmission et on compense par un démarrage du moteur thermique, produite, sur l'embrayage pour le couple parasite ($K_{0,\ parasite}$) prévisible ou observé.

Fig. 1

EP 2 769 112 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0120200 A1

- FR 2921453 A

**In der Beschreibung aufgeführte Nicht-Patentliteratur**

- Model Predictive Control of a Parallel Hybrid Vehicle Drivetrain. **BECK R et al.** DECISION AND CONTROL, 2005 AND 2005 EUROPEAN CONTROL CONFERENCE. CDC-E CC '05. 44TH IEEE CONFERENCE ON SEVILLE, SPAIN. IEEE, 12. Dezember 2005, 2670-2675